# EUROPÄISCHE PATENTSCHRIFT

(11) **EP 3 625 279 B1**
(45) Veröffentlichungstag und Bekanntmachung des Hinweises auf die Patenterteilung: **07.08.2024**
(21) Anmeldenummer: 18722471.2
(22) Anmeldetag: 03.05.2018
(51) Int. Cl.: C08G 18/08, C08G 18/62, C09J 175/06

(54) **POLYURETHAN-BASIERTES BINDEMITTEL-SYSTEM**
POLYURETHANE-BASED BINDER SYSTEM
SYSTÈME DE LIANT À BASE DE POLYURÉTHANE

(30) Priorität: 19.05.2017 DE 102017208511
(43) Veröffentlichungstag der Anmeldung: 25.03.2020
(73) Patentinhaber: Henkel AG & Co. KGaA, 40589 Düsseldorf (DE)
(72) Erfinder: SCHLINGLOFF, Nicole, 40593 Düsseldorf (DE); ENGELS, Thomas, 40589 Düsseldorf (DE); VERBOCKET, Kim, 41066 Mönchengladbach (DE); ZÖLLER, Thomas, 45276 Essen (DE)
(86) Internationale Anmeldenummer: PCT/EP2018/061245
(87) Internationale Veröffentlichungsnummer: WO 2018/210568

(56) Entgegenhaltungen:
- EP-A1- 2 144 944
- US-A- 4 602 079

## Beschreibung

Die vorliegende Erfindung betrifft ein Bindemittel-System, das als Harzkomponente eine spezielle Polyolmischung, die mindestens einen auf einem Fettsäuredimer, -trimer oder den davon abgeleiteten Alkoholen basierenden Polyester, und als Härterkomponente mindestens ein Polyisocyanat und/oder ein NCO-terminiertes Polyurethanpräpolymer enthält, sowie die Verwendung des Bindemittel-Systems als Kleb-/Dichtstoff, insbesondere als Klebstoff zur Verklebung unterschiedlicher Substrate.

Zwei-Komponenten-Bindemittel-Systeme, insbesondere auf Basis von Polyolen und NCO-terminierten Verbindungen, sind seit langem Stand der Technik. Sie werden beispielsweise im Bereich der metallverarbeitenden Industrie, der Fahrzeugindustrie, der Elektroindustrie, der Verpackungsindustrie oder der Bauindustrie als Kleb-, Dicht-, Füllstoffe oder Vergußmassen (Casting) eingesetzt.

In vielen Industrien, wie zum Beispiel der Fahrzeugindustrie, nimmt der Anteil von Produkten, die in Leichtbauweise hergestellt werden, beispielsweise um Emissionsziele zu erreichen, weiter zu. Aufgrund des Einsatzes vieler verschiedener Materialien in diesen Bereichen, existiert die Herausforderung, solche verschiedenartigen Materialien effektiv miteinander zu verkleben. Dafür sind Klebstoffe erforderlich, die neben einer hohen Festigkeit (Zugfestigkeit) auch eine hohe Elongation bereitstellen, um den unterschiedlichen Eigenschaften der Substrate Rechnung zu tragen. Es besteht daher Bedarf an Klebstoffen, die neben einer hohen Festigkeit auch eine hohe Flexibilität bereitstellen und daher die effiziente Verklebung verschiedener Substrate bei Raumtemperatur oder erhöhter Temperatur erlauben.

EP 2 144 944 beschreibt ein Polyurethan-Elastomer, das eine erhöhte Hydrolyseresistenz aufweisen soll, das durch Inkontaktbringen eines Polyesters auf Basis von Dimerfettsäuren, einem Polyesterdiol mit einem Molekulargewicht von 2000, MEG als Kettenverlängerer und einem MDI-Präpolymer gewonnen wird.

US 4 602 079 offenbart ein Urethan-Elastomer auf Basis eines Polyesters auf Basis von Dimerfettsäuren, eines Polyesterpolyols, Butandiol als Kettenverlängerer und MDI.

Aufgabe der vorliegenden Erfindung war es, ein Bindemittel-System zur Verfügung zu stellen, das diese Vorgaben erfüllt und sowohl hohe Zugfestigkeiten als auch hohe Flexibilitäten liefert.

Die Erfinder haben überraschenderweise gefunden, dass sich diese Aufgabe durch ein Bindemittel-System lösen lässt, das eine spezielle Polyolmischung als Harzkomponente und ein Polyisocyanat als Härter verwendet.

In einem ersten Aspekt betrifft die Erfindung daher ein Bindemittel-System enthaltend
(i) eine Harzkomponente enthaltend
   (a) mindestens 10 Gew.-% bezogen auf das Gesamtgewicht der Harzkomponente eines Polyesterpolyols, welches auf einem Fettsäuredimer oder -trimer oder den davon abgeleiteten Diolen oder Triolen basiert, mit einem gewichtsmittleren Molekulargewicht (Mw) von mindestens 1000 g/mol, vorzugsweise 1000 bis 4000 g/mol;
   (b) mindestens 10 Gew.-% bezogen auf das Gesamtgewicht der Harzkomponente eines von (a) unterschiedlichen Polyesterpolyols mit einem gewichtsmittleren Molekulargewicht (Mw) von mindestens 1000 g/mol, vorzugsweise 1000 bis 4000 g/mol;
   (c) optional ein von (a) und (b) unterschiedliches aliphatisches, OH-terminiertes Polymer mit einem gewichtsmittleren Molekulargewicht (Mw) von mindestens 1000 g/mol, vorzugsweise 1000 bis 20.000 g/mol; und
   (d) optional einen monomeren Kettenverlängerer mit mindestens 2 NCO-reaktiven Gruppen;
(ii) eine Härterkomponente enthaltend mindestens ein Polyisocyanat, vorzugsweise ein aromatisches Diisocyanat, und/oder mindestens ein NCO-terminiertes Polyurethanpräpolymer,
wobei das Polyesterpolyol (b) ein Polycarbonatpolyol mit Hexandiol und/oder Dodecandiol als Diol-Komponente ist.

Ein weiterer Aspekt der Erfindung richtet sich auf die Verwendung des hierin beschriebenen Bindemittel-Systems in Klebstoffformulierungen, insbesondere als Zweikomponenten-Klebstoff, zur Herstellung von Klebeverbindungen zwischen Substraten, wobei die Substrate insbesondere unterschiedliche Substrate sind, beispielsweise ausgewählt aus Holz, Kunststoff oder Metall.

In einem weiteren Aspekt betrifft die Erfindung Verfahren zur Herstellung eines Kleb-/Dichtstoffes unter Verwendung des hierin beschriebenen Bindemittel-Systems. Dabei wird die Harzkomponente mit der Härterkomponente in einem (molaren) Verhältnis der Isocyanatgruppen zu Hydroxylgruppen von 5:1 bis 1:1 gemischt.
(a) In noch einem weiteren Aspekt betrifft die Erfindung auch Polymerzusammensetzungen, die erhältlich sind durch Reaktion einer Harzkomponente enthaltend mindestens 10 Gew.-% bezogen auf das Gesamtgewicht der Harzkomponente eines Polyesterpolyols, welches auf einem Fettsäuredimer oder-trimer oder den davon abgeleiteten Diolen oder Triolen basiert, mit einem gewichtsmittleren Molekulargewicht (Mw) von mindestens 1000 g/mol, vorzugsweise 1000 bis 4000 g/mol;
(b) mindestens 10 Gew.-% bezogen auf das Gesamtgewicht der Harzkomponente eines von (a) unterschiedlichen Polyesterpolyols mit einem gewichtsmittleren Molekulargewicht (Mw) von mindestens 1000 g/mol, vorzugsweise 1000 bis 4000 g/mol, bei dem es sich um ein Polycarbonatpolyol mit Hexandiol und/oder Dodecandiol als Diol-Komponente handelt;
(c) optional ein von (a) und (b) unterschiedliches aliphatisches, OH-terminiertes Polymer mit einem gewichtsmittleren Molekulargewicht (Mw) von mindestens 1000 g/mol, vorzugsweise 1000 bis 20.000 g/mol; und
(d) optional einen monomeren Kettenverlängerer mit mindestens 2 NCO-reaktiven Gruppen; mit einer Härterkomponente enthaltend mindestens ein Polyisocyanat, vorzugsweise ein aromatisches Diisocyanat,
dadurch gekennzeichnet, dass das Polyesterpolyol (b) ein Polycarbonatpolyol mit Hexandiol und/oder Dodecandiol als Diol-Komponente ist.

Die im vorliegenden Text angegebenen Molekulargewichte beziehen sich, soweit nicht anders angegeben, auf das gewichtsmittlere Molekulargewicht (Mw). Alle Molekulargewichtsangaben beziehen sich, soweit nicht anders angegeben ist, auf Werte, wie sie durch Gelpermeationschromatographie (GPC) erhältlich sind.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Polyol" bedeutet somit beispielsweise mindestens eine Art von Polyol, d.h. dass eine Art von Polyol oder eine Mischung mehrerer verschiedener Polyole verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

Die Harzkomponente des erfindungsgemäßen Bindemittelsystems umfasst mindestens 10 Gew.-% bezogen auf das Gesamtgewicht der Harzkomponente eines Polyesterpolyols (a), welches auf einem Fettsäuredimer oder -trimer oder den davon abgeleiteten Diolen oder Triolen basiert, mit einem gewichtsmittleren Molekulargewicht (Mw) von mindestens 1000 g/mol, vorzugsweise 1000 bis 4000 g/mol. Dieses Polyesterpolyol (a) ist vorzugsweise ein Diol oder Triol, besonders bevorzugt ein Diol.

Der Ausdruck "Fettsäuredimer oder -trimer", wie hierin verwendet, bezieht sich auf das dimerisierte Produkt der Reaktion von zwei oder mehr einfach oder mehrfach ungesättigten Fettsäuren. Derartige Fettsäuredimere sind im Stand der Technik gut bekannt und existieren typischerweise als Mischungen. Sie enthalten oftmals einen Anteil an trimeren und monomeren Fettsäuren, wobei letzterer relativ gering ist. Üblich sind Anteile von 0 bis 20 Mol-% Fettsäuretrimer. Solche Fettsäuredimere sowie daraus abgeleitete Polyester werden beispielsweise in GB 2203425 A beschrieben. Die davon abgeleiteten Diole oder Triole sind durch die Reduktion der Carboxylgruppen zu Hydroxylgruppen erhältlich. Besonders bevorzugt sind Dimere von C18-Fettsäuren, d.h. Fettsäuredimere mit 36 C-Atomen. Diese sind beispielsweise erhältlich durch Dimerisierung von Ölsäure, Linolsäure und Linolensäure sowie Mischungen daraus.

Die Polyesterpolyole (a) sind erhältlich durch Reaktion (Polykondensation) der oben beschriebenen Fettsäuredimere oder -trimere mit Polyolen, insbesondere Diolen, insbesondere aliphatischen C2-6 Diolen (wie unten im Kontext mit Polyester (b) beschrieben) oder Polyetherdiolen (wie unten beschrieben), sowie weiteren Polycarbonsäuren, insbesondere Dicarbonsäuren, insbesondere aliphatischen oder aromatischen C4-12 Dicarbonsäuren (wie unten im Kontext mit Polyester (b) beschrieben). Die zusätzlichen Dicarbonsäuren können dabei in einem molaren Verhältnis zu den Fettsäuredimeren von 1:9 bis 9:1, vorzugsweise 1:8 bis 8:1, vorzugsweise 1:1 bis 8:1 eingesetzt werden.

Alternativ können auch die von den Fettsäuredimeren/-trimeren abgeleiteten Alkohole mit den oben genannten Dicarbonsäuren und weiterhin auch den Diolen umgesetzt werden.

Die so erhaltenen Polyesterpolyole (a) haben vorzugsweise ein gewichtsmittleres Molekulargewicht (Mw) im Bereich von 1000 bis 4000 g/mol, insbesondere 1500 bis 3000 g/mol.

Geeignete Polyesterpolyole (a) auf Basis von C36-Fettsäuredimeren sind beispielsweise unter dem Handelsnamen Priplast^{®} (Croda International PLC) erhältlich, insbesondere als Priplast^{®} 1838 LQ.

Die Polyesterpolyole (a) sind in der Harzkomponente in Mengen von mindestens 10 Gew.-% bis zu 90 Gew.-% enthalten, vorzugsweise bis 70 Gew.-%, noch bevorzugter bis 50 Gew.-%, jeweils bezogen auf das Gesamtgewicht der Harzkomponente. Die Untergrenze liegt vorzugsweise bei 15 Gew.-%, bevorzugter 20 Gew.-%, noch bevorzugter 25 Gew.-%. Typische Einsatzmengen sind 15-45 Gew.-%.

Neben den erfindungsgemäß vorgesehenen Polycarbonatpolyol (b) kann die Harzkomponente weitere Polyester enthalten. Geeignete Polyesterpolyole sind durch Polykondensation herstellbar. So können difunktionelle und/oder trifunktionelle Alkohole mit einem Unterschuss an Dicarbonsäuren oder Tricarbonsäuren oder Gemischen aus Dicarbonsäuren oder Tricarbonsäuren, oder deren reaktiven Derivaten, zu Polyesterpolyolen kondensiert werden. Polyesterpolyole umfassen beispielsweise die Umsetzungsprodukte von polyfunktionellen, bevorzugt difunktionellen Alkoholen (gegebenenfalls zusammen mit geringen Mengen an trifunktionellen Alkoholen) und polyfunktionellen, bevorzugt difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit bevorzugt 1 bis 3 C-Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Dodekandisäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, oder Gemische aus zwei oder mehr davon geeignet. Als Tricarbonsäuren sind beispielsweise Zitronensäure oder Trimellithsäure geeignet. Die genannten Säuren können einzeln oder als Gemische aus zwei oder mehr davon eingesetzt werden. Generell sind C4-12 Dicarbonsäuren, also Dicarbonsäuren mit 4 bis 12 C-Atomen, und hierbei insbesondere Phthalsäure, Isophthalsäure, Terephthalsäure, Adipinsäure, Dodekandisäure und deren Gemische, besonders geeignet.

Besonders geeignete Alkohole sind Hexandiol, Butandiol, Ethylenglykol, Diethylenglykol, Neopentylglykol, Propylenglykol, Glycerin oder Trimethylolpropan oder Gemische aus zwei oder mehr davon. Ebenfalls als polyfunktionelle Alkohole zur Herstellung von Polyesterpolyolen geeignet sind 1,4-Hydroxymethylcyclohexan, 2-Methyl-1,3-propandiol, 1,2,4-Butantriol, Triethylenglykol, Tetraethylenglykol, Polyethylenglykol, Dipropylenglykol, Polypropylenglykol, Dibutylenglykol und Polybutylenglykol. Generell sind C2-6 Diole, also Diole mit 2 bis 6 C-Atomen, bevorzugt.

Aus Lactonen, beispielsweise auf Basis von ε-Caprolacton, auch "Polycaprolactone" genannt, oder Hydroxycarbonsäuren, beispielsweise ω-Hydroxycapronsäure, erhältliche Polyester, insbesondere solche erhältlich durch Umsetzung von niedermolekularen Alkoholen, insbesondere von Ethylenglykol, Diethylenglykol, Neopentylglykol, Hexandiol, Butandiol, oder Trimethylolpropan mit Caprolacton, können ebenfalls als Polyesterpolyole eingesetzt werden.

Es können aber auch Polyesterpolyole oleochemischer Herkunft als Polyesterpolyol verwendet werden. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Erfindungsgemäß werden als Polyesterpolyole (b) Polycarbonatpolyole eingesetzt. Diese werden durch die Reaktion von 1,6-Hexandiol und/oder 1,12-Dodekandiol Dialkylcarbonaten, Diarylcarbonaten, beispielsweise Diphenylcarbonaten, oder Phosgen, erhalten werden. Der Begriff "Polyesterpolyol", wie hierin verwendet, schließt daher Polycarbonatpolyole ein.

Das Polyesterpolyol (b) enthält aber als Säure- oder Alkoholbestandteil nicht die Fettsäuredimere oder -trimere bzw. die davon abgeleiteten Alkohole, die die Basis des Polyesters (a) bilden. Es ist somit erfindungsgemäß ausgeschlossen, dass das Polyesterpolyol (b) unter die Definition des Polyesterpolyols (a) fällt und umgekehrt.

Die Polyesterpolyole (b) haben vorzugsweise ein gewichtsmittleres Molekulargewicht (Mw) im Bereich von 1000 bis 4000 g/mol, insbesondere 1500 bis 3000 g/mol.

Die Polyesterpolyole (b) sind in der Harzkomponente in Mengen von mindestens 10 Gew.-% bis zu 90 Gew.-% enthalten, vorzugsweise bis 60 Gew.-%, noch bevorzugter bis 40 Gew.-%, jeweils bezogen auf das Gesamtgewicht der Harzkomponente. Die Untergrenze liegt vorzugsweise bei 15 Gew.-%. Typische Einsatzmengen sind ungefähr 15-40 Gew.-%.

Die Harzkomponente kann über die genannten Polyester (a) und (b) hinaus weitere Polyole enthalten. Hierbei sind insbesondere aliphatische, OH-terminierte Polymere (c) zu nennen.

Bei diesen kann es sich beispielsweise um Polyetherpolyole, vorzugsweise aber um olefinische Polymere oder Synthesekautschuke mit Hydroxyl-Endgruppen handeln.

Polyetherpolyole können aus einer Vielzahl von Alkoholen hergestellt werden, die eine oder mehrere, primäre oder sekundäre Alkoholgruppen enthalten. Als Starter für die Herstellung der keine tertiären Aminogruppen enthaltenden Polyether können beispielsweise folgende Verbindungen oder Mischungen dieser Verbindungen eingesetzt werden: Wasser, Ethylenglykol, Propylenglykol, Glycerin, Butandiol, Butantriol, Trimethylolethan, Pentaerythrit, Hexandiol, 3-Hydroxyphenol, Hexantriol, Trimethylolpropan, Oktandiol, Neopentylglykol, 1,4-Hydroxymethylcyclohexan, Bis(4-hydroxyphenyl)dimethylmethan und Sorbit. Bevorzugt werden Ethylenglykol, Propylenglykol, Glycerin und Trimethylolpropan eingesetzt, besonders bevorzugt Ethylenglykol und Propylenglykol, und in einer besonders bevorzugten Ausführungsform wird Propylenglykol eingesetzt.

Als cyclische Ether zur Herstellung von vorstehend beschriebenen Polyethern kommen Alkylenoxide wie Ethylenoxid, Propylenoxid, Butylenoxid, Epichlorhydrin, Styroloxid oder Tetrahydrofuran oder Gemische aus diesen Alkylenoxiden in Betracht. Bevorzugt werden Propylenoxid, Ethylenoxid oder Tetrahydrofuran oder Gemische aus diesen verwendet. Besonders bevorzugt wird Propylenoxid oder Ethylenoxid oder Gemische aus diesen verwendet. Ganz besonders bevorzugt wird Propylenoxid verwendet.

OH-terminierte Polyolefine oder Synthesekautschuke sind insbesondere solche auf Basis von Polybutadien, Polyisopren, Polybutylen oder Polypropylen, insbesondere (hydriertes) Polybutadien. Letztgenannte sind beispielsweise unter dem Handelsnamen Krasol^{®} von Cray Valley erhältlich, wobei hierbei Krasol^{®} HLBH P-2000 und P-3000 besonders bevorzugt sind.

Die aliphatischen, OH-terminierte Polymeren (c) haben vorzugsweise ein gewichtsmittleres Molekulargewicht (Mw) im Bereich von 1000 bis 4000 g/mol, insbesondere 2000 bis 3500 g/mol.

Die aliphatischen, OH-terminierte Polymere (c) sind in der Harzkomponente optional in Mengen bis zu 40 Gew.-% enthalten, vorzugsweise bis 30 Gew.-%, noch bevorzugter bis 25 Gew.-%, jeweils bezogen auf das Gesamtgewicht der Harzkomponente. Die Untergrenze liegt vorzugsweise bei 5Gew.-%. Typische Einsatzmengen sind etwa 5-20 Gew.-%.

Die aliphatischen, OH-terminierten Polymere (c) umfassen keine Polyester, d.h. es ist erfindungsgemäß ausgeschlossen, dass die Polyesterpolyole (a) und (b) unter die Definition des Polymers (c) fallen und umgekehrt.

Schließlich kann die Harzkomponente auch noch einen Kettenverlängerer (d) mit mindestens zwei NCO-reaktiven Gruppen enthalten. Dabei sind insbesondere monomere Diole, insbesondere monomere aliphatische Diole bevorzugt. Beispiele für geeignete Verbindungen sind C2 bis C20 Diole, insbesondere C6 bis C12 Diole, wie beispielsweise 1,9-Nonandiol.

Die Kettenverlängerer sind in der Harzkomponente in Mengen von bis zu 20 Gew.-%, vorzugsweise bis 15 Gew.-%, ganz besonders bevorzugt 5 bis 12 Gew.-% enthalten.

Die Härterkomponente enthält mindestens ein Polyisocyanat und/oder mindestens ein NCO-terminiertes Polyurethanpräpolymer.

Geeignete Polyisocyanate sind aliphatische, aromatische und/oder alicyclische Isocyanate mit zwei oder mehr, bevorzugt zwei bis höchstens etwa vier, Isocyanatgruppen. Besonders bevorzugt werden im Rahmen der vorliegenden Erfindung monomere Polyisocyanate, insbesondere monomere Diisocyanate, eingesetzt. Beispiele für geeignete monomere Polyisocyanate sind: 1,5-Naphthylendiisocyanat, 2,2'-, 2,4- und/oder 4,4'-Diphenylmethandiisocyanat (MDI), hydriertes MDI (H12MDI), Allophanate des MDI, Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-lsocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylendiisocyanat, Phthalsäure-bis-isocyanato-ethylester, ferner Diisocyanate mit reaktionsfähigen Halogenatomen, wie 1-Chlormethylphenyl-2,4-diisocyanat, 1-Brommethylphenyl-2,6-diisocyanat-3,3-Bis-chlormethylether-4,4'-diphenyldiisocyanat oder schwefelhaltige Polyisocyanate. Schwefelhaltige Polyisocyanate erhält man beispielsweise durch Umsetzung von 2 mol Hexamethylendiisocyanat mit 1 mol Thiodiglykol oder Dihydroxydihexylsulfid.

Weitere einsetzbare Diisocyanate sind beispielsweise Trimethylhexamethylendiisocyanat, 1,4-Diisocyanatobutan, 1,12-Diisocyanatododecan und Dimerfettsäurediisocyanat. Besonders geeignet sind: Tetramethylen-, Hexamethylen, Undecan-, Dodecamethylen-, 2,2,4-Trimethylhexan-, 2,3,3-Trimethyl-hexamethylen, 1,3-Cyclohexan-, 1,4-Cyclohexan-, 1,3- bzw. 1,4-Tetramethylxylol-, Isophoron-, 4,4-Dicyclohexylmethan- und Lysinesterdiisocyanat.

Als mindestens trifunktionelle Isocyanate geeignet sind Polyisocyanate, die durch Trimerisation oder Oligomerisation von Diisocyanaten oder durch Reaktion von Diisocyanaten mit polyfunktionellen hydroxyl- oder aminogruppenhaltigen Verbindungen entstehen.

Zur Herstellung von Trimeren geeignete Isocyanate sind die bereits oben genannten Diisocyanate, wobei die Trimerisierungsprodukte der Isocyanate HDI, MDI, TDI oder IPDI besonders bevorzugt sind.

Weiterhin sind als Triisocyanate auch Addukte aus Diisocyanaten und niedermolekularen Triolen geeignet, insbesondere die Addukte aus aromatischen Diisocyanaten und Triolen wie zum Beispiel Trimethylolpropan oder Glycerin. Ebenfalls zum Einsatz geeignet sind die polymeren Isocyanate, wie sie beispielsweise als Rückstand im Destillationssumpf bei der Destillation von Diisocyanaten anfallen. Besonders geeignet ist hierbei das polymere MDI, wie es bei der Destillation von MDI aus dem Destillationsrückstand erhältlich ist.

Die eingesetzten Polyisocyanate sind insbesondere aromatische Polyisocyanate, besonders bevorzugt aromatische Diisocyanate. In einer bevorzugten Ausführungsform der Erfindung werden daher als Polyisocyanate monomere Polyisocyanate aus der Gruppe 1,5-Naphthylendiisocyanat, 2,2'-, 2,4- und/oder 4,4'-Diphenylmethandiisocyanat (MDI), die Isomeren des Toluylendiisocyanats (TDI), Tetramethylxylylendiisocyanat (TMXDI), Trimerisierungsprodukte der Isocyanate MDI oder TDI; sowie Gemische daraus, eingesetzt. Besonders bevorzugt sind Methylendiphenyldiisocyanate (MDI), wie 4,4-Methylendiphenyldiisocyanat, 2,4-Methylendiphenyldiisocyanat oder 2,2-Methylendiphenyldiisocyanat bzw. Mischungen davon.

Die Isocyanat (NCO)-terminierten PU-Präpolymere, die in der Härterkomponente anstelle oder zusätzlich zu den Polyisocyanaten enthalten sein können, werden durch Umsetzen eines Polyol oder einer Polyolmischung mit einem stöchiometrischen Überschuss von Polyisocyanat erhalten. Die bei der Herstellung des Präpolymers eingesetzten Polyole können alle üblicherweise für die Polyurethansynthese eingesetzten Polyole, beispielsweise monomere Polyole, Polyesterpolyole einschließlich der Polycarbonatpolyole, Polyetherpolyole, Polyesteretherpolyole, oder Mischungen von zwei oder mehr der genannten sein.

Die Polyetherpolyole, Polyesterpolyole, Polycarbonatpolyole, und monomeren Polyole können die bereits oben im Kontext mit den Bestandteilen der Harzkomponente beschriebenen Verbindungen sein.

Das Molekulargewicht der zur Synthese des Präpolymers verwendeten Polyole liegt vorzugsweise im Bereich bis 20.000 g/mol, insbesondere bis 10.000 g/mol. Die nominelle Funktionalität kann 2, 3 oder 4 betragen, vorzugsweise 2 oder 3. Die durchschnittliche Funktonalität liegt demnach vorzugsweise im Bereich von 2 bis 4, 2 bis 3 oder bei 2-2,5.

In verschiedenen Ausführungsformen der Erfindung werden als Polyole für die Herstellung der NCO-terminierten Präpolymere Polyesterpolyole, insbesondere solche die durch Kondensation von Adipinsäure und/oder Isophthalsäure mit Diethylenglykol und/oder 1 ,2-Propylenglykol erhältlich sind, optional in Kombination mit 1,2-Propylenglykol, verwendet.

Für die Herstellung der Präpolymere geeignete Polyisocyanate sind die bereits oben beschriebenen.

Das mindestens eine NCO-terminierte PU-Präpolymer ist vorzugsweise ein aromatisches Isocyanatterminiertes, noch bevorzugter MDI-terminiertes Polyurethan-Präpolymer aus einem oder mehreren Polyetherpolyol(en), insbesondere Polyethylenglykol, Polypropylenglykol und Copolymeren davon, und einem aromatischen Diisocyanat, wie MDI.

Erfindungsgemäß bevorzugt sind NCO-terminierte Präpolymere mit einem Polyether-Polymerrückgrat, insbesondere solche aus einem Polyetherpolyol aus Ethylenoxid und Propylenoxid.

Der stöchiometrische Überschuss von Polyisocyanat bei der Synthese der Präpolymeren kann bezogen auf das molare Verhältnis von NCO- zu OH-Gruppen 2 bis 25, vorzugsweise 4 bis 10 oder 11 bis 25 betragen. Derartig hohe Überschüsse werden insbesondere dann eingesetzt, wenn das erhaltene Präpolymer zusammen mit dem nicht umgesetzten Polyisocyanat als Härter eingesetzt wird. In solchen Fällen ist der Härter eine Mischung aus NCO-terminiertem Präpolymer und monomeren Polyisocyanaten.

Die entsprechenden Präpolymere weisen üblicherweise einen NCO-Gehalt von 5-30 Gew.-%, vorzugsweise 9 bis 19, noch bevorzugter 13-18, am bevorzugtesten 12-17 Gew.-% auf und haben eine nominelle mittlere NCO-Funktionalität von 2 bis 3, vorzugsweise 2 bis 2,7, bevorzugter 2 bis 2,4, am bevorzugtesten 2 bis 2,2.

Aufgrund des eingesetzten Überschusses an Isocyanat, enthalten die NCO-terminierten PU-Präpolymere, wie bereits oben erwähnt, üblicherweise gewisse Mengen an Isocyanat-Monomeren, d.h. insbesondere aromatischen Polyisocyanat-Monomeren, wie beispielsweise MDI. Die Menge kann hierbei üblicherweise 10 bis 40 Gew.-%, insbesondere 20 bis 30 Gew.-%, bezogen auf den gesamten NCO-Gehalt, betragen.

Das gewichtsmittlere Molekulargewicht (Mw) des Präpolymers liegt üblicherweise im Bereich von 1500 g/mol bis 100.000 g/mol, insbesondere bevorzugt von 2.000 g/mol bis 50.000 g/mol.

Die Herstellung der NCO-terminierten Präpolymere ist dem Fachmann an sich bekannt und erfolgt beispielsweise derart, dass die bei Reaktionstemperaturen flüssigen Polyole mit einem Überschuss der Polyisocyanate vermischt werden und die resultierende Mischung bis zum Erhalt eines konstanten NCO-Wertes gerührt wird. Als Reaktionstemperatur werden Temperaturen im Bereich von 40°C bis 180°C, vorzugsweise 50°C bis 140°C gewählt.

Die Härterkomponente enthält vorzugsweise bis zu 100 Gew.-% der Polyisocyanate, typischerweise 90 bis 100 Gew.-%, bezogen auf die Härterkomponente. Ganz besonders bevorzugt sind hier aromatische Diisocyanate, wie MDI. In verschiedenen Ausführungsformen kann der Härter aber auch eine Kombination aus mindestens einem Polyisocyanat, vorzugsweise einem aromatischen Diisocyanat, wie MDI, mit mindestens einem NCO-terminierten Präpolymer enthalten. In solchen Ausführungsformen kann das Präpolymer bis zu 90 Gew.-% des Härters, vorzugsweise bis zu 80 Gew.-% ausmachen, wobei der Rest das mindestens eine Polyisocyanat sein kann, welches in Mengen von mindestens 10, vorzugsweise mindestens 20 Gew.-% eingesetzt wird.

Das hierin beschriebene Bindemittel-System kann in verschiedenen Ausführungsformen ferner mindestens einen Katalysator enthalten, insbesondere ausgewählt aus Metallkatalysatoren auf Basis von Sn oder Ti oder Aminkatalysatoren. Geeignete Katalysatoren sind im Stand der Technik bekannt. In bevorzugten Ausführungsformen enthält das Bindemittel-System einen Zinn-basierten Katalysator, insbesondere einen Organozinn-Katalysator wie DBTL (Dibutylzinndilaurat).

Das hierin beschriebene Bindemittel-System eignet sich insbesondere als Kleb/Dichtstoff.

Gegenstand der vorliegenden Erfindung ist daher auch ein Verfahren zur Herstellung eines Kleb-/Dichtstoffes unter Verwendung des hierin beschriebenen Bindemittel-Systems, wobei man die Harzkomponente mit der Härterkomponente in geeigneten Volumenverhältnissen, typischerweise 10:1 bis 1:1, insbesondere 5:1 bis 1:1, besonders bevorzugt 2:1 und 1:1 mischt. Dabei ist das molare Verhältnis der Isocyanatgruppen zu NCO-reaktiven (insbesondere OH) Gruppen von 10:1 bis 1:1, bevorzugt 7:1 bis 1:1, besonders bevorzugt von 5:1 bis 1:1 weiter bevorzugt von 3:1 bis 1:1 und insbesondere von 2:1 bis 1:1. Der NCO Index beträgt vorzugsweise 0,9-2,0, insbesondere 1,0-1,5.

Der so erhältliche Kleb-/Dichtstoff hat in verschiedenen Ausführungsformen nach der Mischung der beiden Komponenten und 7 Tagen Inkubation bei Normalbedingungen (23°C, 50% rel. Luftfeuchte, 1013 mbar) eine Zugfestigkeit von >7 MPa, typischerweise 7 bis 25 MPa und eine Dehnung von >80 bis 600 %.

In einer Ausführungsform des hierin beschriebenen Verfahrens erfolgt die Reaktion zwischen Harz- und Härterkomponente in Gegenwart eines Lösemittels. Als Lösemittel sind grundsätzlich alle dem Fachmann bekannte Lösemittel verwendbar, insbesondere Ester, Ketone, halogenierte Kohlenwasserstoffe, Alkane, Alkene und aromatische Kohlenwasserstoffe. Beispiele für solche Lösemittel sind Methylenchlorid, Trichlorethylen, Toluol, Xylol, Butylacetat, Amylacetat, Isobutylacetat, Methylisobutylketon, Methoxybutylacetat, Cyclohexan, Cyclohexanon, Dichlorbenzol, Diethylketon, Di-isobutylketon, Dioxan, Ethylacetat, Ethylenglykolmonobutyletheracetat, Ethylenglykolmonoethylacetat, 2-Ethylhexylacetat, Glykoldiacetat, Heptan, Hexan, Isobutylacetat, Isooctan, Isopropylacetat, Methylethylketon, Tetrahydrofuran oder Tetrachlorethylen oder Mischungen aus zwei oder mehr der genannten Lösemittel. In bevorzugten Ausführungsformen wird allerdings kein Lösemittel eingesetzt.

Das hierin beschriebene Bindemittel-System eignet sich als Zweikomponenten-Klebstoff zum Verkleben und Dichten der unterschiedlichsten Substrate. Zu diesen Substraten zählen beispielsweise Holz, Metall, Glas, Pflanzenfasern, Stein, Papier, Cellulosehydrat, Kunststoffe wie ABS, Polystyrol, Polyethylen, Polypropylen, Polyethylenterephthalat, Polyvinylchlorid, Copolymere von Vinylchlorid und Vinylidenchlorid, Copolymere von Vinylacetatolefinen, Polyamide sowie kohlenstofffaserverstärkte Kunststoffe. Als Metalle sind beispielsweise Aluminium, Stahl und Eisen von Bedeutung.

In einer besonders bevorzugten Ausführungsform der Erfindung wird das hierin beschriebene Bindemittel-System als lösemittelfreier Klebstoff verwendet.

Das hierin beschriebene Bindemittel-System kann mit allen gängigen Auftragsverfahren auf die zu verklebenden Substrate aufgebracht werden, beispielsweise durch Raupendosierung, Sprühen, Rakeln, 3-4-Walzenauftragswerke im Falle der Anwendung eines lösemittelfreien Bindemittel-Systems oder 2 Walzenauftragswerke im Falle der Anwendung eines lösemittelhaltigen Bindemittel-Systems.

Das hierin beschriebene Bindemittel-System kann übliche Additive, wie Weichmacher, Trocknungsmittel, Füllstoffe, Silane, Antioxidantien, UV-Stabilisierungsmittel und Alterungsschutzmittel sowie Kombinationen davon enthalten. Diese können sowohl der Harzkomponente als auch der Härterkomponente zugesetzt werden.

Bevorzugt einsetzbare Weichmacher sind Phthalsäureester, beispielsweise Dioctylphthalat, Ditridecylphthalat und Butylbenzylphthalat, Phosphorsäureester, beispielsweise Tricresylphosphat, Adipate, beispielsweise Dioctyladipat, oder Benzoate, beispielsweise Propylenglykoldibenzoat.

Amino-, Epoxy-, oder Mercaptosilane, insbesondere gamma-Glycidyloxypropyl- oder gamma-Aminopropyltrimethoxysilan, dienen vor allem der Verbesserung der Haftung auf Glas, Metallen etc.

Dem hierin beschriebenen Bindemittel-System können ferner anorganische Füllstoffe wie Ruß, Calciumcarbonat, Titandioxid und dergleichen zugesetzt werden. Als weitere anorganische Füllstoffe finden vorzugsweise hochdisperse Kieselsäuren, vor allem pyrogene Kieselsäuren oder Fällungskieselsäuren Verwendung, welche thixotropierend wirken und deren thixotropierende Eigenschaften in den hierin beschriebenen Bindemittel-Systemen auch nach längerer Lagerung erhalten bleiben. Als Trocknungsmittel können beispielsweise Zeolithe eingesetzt werden.

Die hierin beschriebenen Bindemittel-Systeme können in Klebstoffformulierungen zur Herstellung von Klebeverbindungen zwischen Substraten verwendet werden. Dabei können die Substrate aus den bereits oben genannten ausgewählt werden.

In einem weiteren Aspekt betrifft die Erfindung auch Polymerzusammensetzungen, die erhältlich sind durch Reaktion einer wie hierin beschriebenen Harzkomponente mit einer wie hierin beschriebenen Härterkomponente, die mindestens ein Polyisocyanat, vorzugsweise ein aromatisches Diisocyanat enthält. In verschiedenen Ausführungsformen wird ein Überschuss an Härter bezogen auf das molare Verhältnis von NCO- zu NCO-reaktiven (OH) Gruppen eingesetzt. Auf diese Weise lassen sich NCO-terminierte Präpolymere erhalten. Diese können dann als Härter, entweder allein oder in Kombination mit (monomeren) Polyisocyanaten, in den hierin beschriebenen Bindemittelsystemen eingesetzt werden, wobei die Harzkomponente unverändert bleibt. Alternativ können diese so erhältlichen NCO-terminierten Präpolymere, die die Polyesterpolyole (a), welche auf einem Fettsäuredimer oder -trimer oder den davon abgeleiteten Diolen oder Triolen basieren, im Rückgrat enthalten, aber auch in Kombination mit im Stand der Technik bekannten Harzkomponenten auf Polyolbasis eingesetzt werden. Ebenfalls vorstellbar ist der Einsatz als Harz in Kombination mit einem Härter der Verbindungen mit NCO-reaktiven Gruppen enthält, wie beispielsweise Polyole oder Polyamine. Derartige Ausführungsformen sind dem Fachmann bekannt. Es ist beabsichtigt, dass derartige Bindemittelsysteme ebenfalls von der Erfindung erfasst werden.

Alle hierin im Zusammenhang mit dem Bindemittel-System offenbarten Ausführungsformen sind auch auf die beschriebenen Verwendungen und Verfahren sowie die Polymerzusammensetzungen und Bindemittel-Systeme, die diese enthalten, anwendbar und umgekehrt. Nachfolgend soll die Erfindung an einigen exemplarischen Beispielen näher erläutert werden. Dabei sind die angegeben Mengen Gewichtsprozent, falls nicht anders angegeben.

### Beispiele

### Beispiel 1:

**Tabelle 1. Harzkomponente**

| | **Mw (g/mol)** | **OH-Funktionalität** | **OH-Zahl** | **Menge (Gew.-%)** |
|---|---|---|---|---|
| Priplast 1838 LQ (C36-Fettsäuredimer-basierter Polyester) | 2000 | 2 | 56 | 41,46 |
| Krasol HLBH P-3000 (OH-terminiertes hydriertes Polybutadien) | 3100 | 1,9 | 31 | 21,00 |
| Desmophen C1200 (Polycarbonatpolyol) | 1000 | 1,7 | 56 | 20,46 |
| Nonandiol-1,9 | 160 | 2 | 700 | 10,05 |
| DBTL (Zinn-Katalysator) | | | | 0,03 |
| Sylosiv A3 (Zeolith) | | | | 5,00 |
| Aerosil R202 (pyrogene Kieselsäure) | | | | 2,00 |

Als Härterkomponente wurde eine Mischung von 2,4-/4,4-MDI (Desmodur CD; 94 Gew.-%) und Aerosil R202 (6 Gew.-%) mit einem NCO-Gehalt von 27,8 % eingesetzt.

Harz- und Härterkomponente wurden im gemischt (Harz: 66,93 Gew.-%; Härter: 33,07 Gew.-%) und die mechanischen Eigenschaften der erhaltenen Klebstoffverbindung untersucht. Die Ergebnisse sind in Tabelle 2 dargestellt.

**Tabelle 2. Mechanische Eigenschaften**

| | |
|---|---|
| E Modul (MPa) | 26 |
| Zugfestigkeit (MPa) | 8,8 |
| Bruchdehnung (%) | 250 |

Die mechanischen Eigenschaften wurde mittels DIN EN ISO 527 bestimmt. Die Ergebnisse zeigen, dass die erhaltenen Klebeverbindungen sehr gute mechanische Eigenschaften aufweisen.

## Patentansprüche

1. Bindemittel-System enthaltend
(i) eine Harzkomponente enthaltend
(a) mindestens 10 Gew.-% bezogen auf das Gesamtgewicht der Harzkomponente eines Polyesterpolyols, welches auf einem Fettsäuredimer oder -trimer oder den davon abgeleiteten Diolen oder Triolen basiert, mit einem gewichtsmittleren Molekulargewicht (Mw), wie es durch Gelpermeationschromatographie (GPC) erhältlich ist, von mindestens 1000 g/mol, vorzugsweise 1000 bis 4000 g/mol;
(b) mindestens 10 Gew.-% bezogen auf das Gesamtgewicht der Harzkomponente eines von (a) unterschiedlichen Polyesterpolyols mit einem gewichtsmittleren Molekulargewicht (Mw), wie es durch Gelpermeationschromatographie (GPC) erhältlich ist, von mindestens 1000 g/mol, vorzugsweise 1000 bis 4000 g/mol;
(c) optional mindestens ein von (a) und (b) unterschiedliches aliphatisches, OH-terminiertes Polymer mit einem gewichtsmittleren Molekulargewicht (Mw), wie es durch Gelpermeationschromatographie (GPC) erhältlich ist, von mindestens 1000 g/mol, vorzugsweise 1000 bis 4000 g/mol; und
(d) optional mindestens 2 Gew.-% eines monomeren Kettenverlängerers mit mindestens 2 NCO-reaktiven Gruppen;
(ii) eine Härterkomponente enthaltend mindestens ein Polyisocyanat, vorzugsweise ein aromatisches Diisocyanat, und/oder mindestens ein NCO-terminiertes Polyurethanpräpolymer,
**dadurch gekennzeichnet, dass** das Polyesterpolyol (b) ein Polycarbonatpolyol mit Hexandiol und/oder Dodecandiol als Diol-Komponente ist.

2. Bindemittel-System nach Anspruch 1, **dadurch gekennzeichnet, dass** das Polyesterpolyol (a) erhältlich ist durch Reaktion von Fettsäuredimeren, vorzugsweise solchen erhältlich durch Dimerisierung von zwei C18-Fettsäuren, mit Diolen, vorzugsweise C2-C6-Diolen, und optional von den dimeren Fettsäuren unterschiedlichen Dicarbonsäuren, insbesondere C4-C12 Dicarbonsäuren.

3. Bindemittel-System nach Anspruch 1 oder 2, **dadurch gekennzeichnet, dass** das Polyesterpolyol (a) in der Harzkomponente in einer Menge von 10 Gew.-% bis zu 90 Gew.-% enthalten ist, vorzugsweise bis 70 Gew.-%, noch bevorzugter bis 50 Gew.-%, vorzugsweise in einer Menge von mindestens 15 Gew.-%, bevorzugter von mindestens 20 Gew.-%, noch bevorzugter von mindestens 25 Gew.-%, insbesondere in einer Menge von 30-40 Gew.-%.

4. Bindemittel-System nach einem der Ansprüche 1 bis 3, **dadurch gekennzeichnet, dass** das Polyesterpolyol (b) in der Harzkomponente in einer Menge von 10 Gew.-% bis zu 90 Gew.-% enthalten ist, vorzugsweise bis 60 Gew.-%, noch bevorzugter bis 40 Gew.-%, vorzugsweise in einer Menge von mindestens 15 Gew.-%, insbesondere in einer Menge von etwa 20 Gew.-%.

5. Bindemittel-System nach einem der Ansprüche 1 bis 4, **dadurch gekennzeichnet, dass** das aliphatische, OH-terminierte Polymer mit einem gewichtsmittleren Molekulargewicht (Mw) von mindestens 1000 g/mol
(1) ein OH-terminiertes Polybutadien, insbesondere ein hydriertes Polybutadien ist; und/oder
(2) in der Harzkomponente in einer Menge von bis zu 40 Gew.-% enthalten ist, vorzugsweise bis 30 Gew.-%, noch bevorzugter bis 25 Gew.-%, vorzugsweise in einer Menge von mindestens 5 Gew.-%, insbesondere in einer Menge von etwa 20 Gew.-%.

6. Bindemittel-System nach einem der Ansprüche 1 bis 5, **dadurch gekennzeichnet, dass** der Kettenverlängerer (d)
(1) ein monomeres aliphatisches Diol ist, vorzugsweise ein C6-C12 Diol, insbesondere 1,9-Nonandiol; und/oder
(2) in der Harzkomponente in Mengen von bis 20 Gew.-%, bevorzugt bis 15 Gew.-% enthalten ist.

7. Bindemittel-System nach einem der Ansprüche 1 bis 6, **dadurch gekennzeichnet, dass** die Härterkomponente
(1) mindestens ein aromatisches Diisocyanat enthält, vorzugsweise in einer Menge von 90 bis 100 Gew.-%, bezogen auf die Härterkomponente; oder
(2) mindestens ein aromatisches Diisocyanat und mindestens ein NCO-terminiertes Präpolymer enthält, wobei das Präpolymer vorzugsweise bis zu 90 Gew.-% des Härters, vorzugsweise bis zu 80 Gew.-% ausmacht, und das mindestens eine aromatische Diisocyanat vorzugsweise in Mengen von mindestens 10, vorzugsweise mindestens 20 Gew.-% eingesetzt wird.

8. Verwendung des Bindemittel-Systems nach einem der Ansprüche 1 bis 7 in Klebstoffformulierungen, insbesondere als Zweikomponenten-Klebstoff, zur Herstellung von Klebeverbindungen zwischen Substraten, wobei die Substrate insbesondere unterschiedliche Substrate sind, vorzugsweise ausgewählt aus Holz, Kunststoff oder Metall.

9. Polymerzusammensetzung erhältlich durch Reaktion einer Harzkomponente enthaltend
(a) mindestens 10 Gew.-% bezogen auf das Gesamtgewicht der Harzkomponente eines Polyesterpolyols, welches auf einem Fettsäuredimer oder -trimer oder den davon abgeleiteten Diolen oder Triolen basiert, mit einem gewichtsmittleren Molekulargewicht (Mw), wie es durch Gelpermeationschromatographie (GPC) erhältlich ist, von mindestens 1000 g/mol, vorzugsweise 1000 bis 4000 g/mol;
(b) mindestens 10 Gew.-% bezogen auf das Gesamtgewicht der Harzkomponente eines von (a) unterschiedlichen Polyesterpolyols mit einem gewichtsmittleren Molekulargewicht (Mw), wie es durch Gelpermeationschromatographie (GPC) erhältlich ist, von mindestens 1000 g/mol, vorzugsweise 1000 bis 4000 g/mol;
(c) optional ein von (a) und (b) unterschiedliches aliphatisches, OH-terminiertes Polymer mit einem gewichtsmittleren Molekulargewicht (Mw), wie es durch Gelpermeationschromatographie (GPC) erhältlich ist, von mindestens 1000 g/mol, vorzugsweise 1000 bis 20.000 g/mol; und
(d) optional einen monomeren Kettenverlängerer mit mindestens 2 NCO-reaktiven Gruppen; mit einer Härterkomponente enthaltend mindestens ein Polyisocyanat, vorzugsweise ein aromatisches Diisocyanat,
**dadurch gekennzeichnet, dass** das Polyesterpolyol (b) ein Polycarbonatpolyol mit Hexandiol und/oder Dodecandiol als Diol-Komponente ist.

## Claims

1. A binder system containing
(i) a resin component containing
(a) at least 10 wt.%, based on the total weight of the resin component, of a polyester polyol that is based on a fatty acid dimer or trimer or the diols or triols derived therefrom and has a weight-average molecular weight (Mw), as can be obtained by means of gel permeation chromatography (GPC), of at least 1,000 g/mol, preferably from 1,000 to 4,000 g/mol;
(b) at least 10 wt.%, based on the total weight of the resin component, of a polyester polyol that is different from (a) and has a weight-average molecular weight (Mw), as can be obtained by means of gel permeation chromatography (GPC), of at least 1,000 g/mol, preferably from 1,000 to 4,000 g/mol;
(c) optionally at least one aliphatic OH-terminated polymer that is different from (a) and (b) and has a weight-average molecular weight (Mw), as can be obtained by means of gel permeation chromatography (GPC), of at least 1,000 g/mol, preferably from 1,000 to 4,000 g/mol; and
(d) optionally at least 2 wt.% of a monomeric chain extender having at least 2 NCO-reactive groups;
(ii) a curing component containing at least one polyisocyanate, preferably an aromatic diisocyanate, and/or at least one NCO-terminated polyurethane prepolymer,
**characterized in that** the polyester polyol (b) is a polycarbonate polyol comprising hexanediol and/or dodecanediol as the diol component.

2. The binder system according to claim 1, **characterized in that** the polyester polyol (a) can be obtained by reacting fatty acid dimers, preferably those which can be obtained by dimerizing two C18 fatty acids, with diols, preferably C2-C6 diols, and optionally dicarboxylic acids which are different from the dimer fatty acids, in particular C4-C12 dicarboxylic acids.

3. The binder system according to claim 1 or 2, **characterized in that** the polyester polyol (a) is contained in the resin component in an amount of from 10 wt.% up to 90 wt.%, preferably up to 70 wt.%, more preferably up to 50 wt.%, preferably in an amount of at least 15 wt.%, more preferably of at least 20 wt.%, even more preferably of at least 25 wt.%, in particular in an amount of from 30 to 40 wt.%.

4. The binder system according to one of claims 1 to 3,
**characterized in that** the polyester polyol (b) is contained in the resin component in an amount of from 10 wt.% up to 90 wt.%, preferably up to 60 wt.%, even more preferably up to 40 wt.%, preferably in an amount of at least 15 wt.%, in particular in an amount of approximately 20 wt.%.

5. The binder system according to one of claims 1 to 4,
**characterized in that** the aliphatic OH-terminated polymer having a weight-average molecular weight (Mw) of at least 1,000 g/mol
(1) is an OH-terminated polybutadiene, in particular a hydrogenated polybutadiene; and/or
(2) is contained in the resin component in an amount of up to 40 wt.%, preferably up to 30 wt.%, more preferably up to 25 wt.%, preferably in an amount of at least 5 wt.%, in particular in an amount of approximately 20 wt.%.

6. The binder system according to one of claims 1 to 5,
**characterized in that** the chain extender (d)
(1) is a monomeric aliphatic diol, preferably a C6-C12 diol, in particular 1,9-nonanediol; and/or
(2) is contained in the resin component in amounts of up to 20 wt.%, preferably up to 15 wt.%.

7. The binder system according to one of claims 1 to 6,
**characterized in that** the curing component
(1) contains at least one aromatic diisocyanate, preferably in an amount of from 90 to 100 wt.%, based on the curing component; or
(2) contains at least one aromatic diisocyanate and at least one NCO-terminated prepolymer, the prepolymer preferably constituting up to 90 wt.% of the curing agent, preferably up to 80 wt.%, and the at least one aromatic diisocyanate preferably being used in amounts of at least 10, preferably at least 20 wt.%.

8. The use of the binder system according to one of claims 1 to 7 in adhesive formulations, in particular as a two-component adhesive, for preparing adhesive bonds between substrates, the substrates in particular being different substrates, preferably selected from wood, plastics or metal.

9. A polymer composition which can be obtained by reacting a resin component containing
(a) at least 10 wt.%, based on the total weight of the resin component, of a polyester polyol that is based on a fatty acid dimer or trimer or the diols or triols derived therefrom and has a weight-average molecular weight (Mw), as can be obtained by means of gel permeation chromatography (GPC), of at least 1,000 g/mol, preferably from 1,000 to 4,000 g/mol;
(b) at least 10 wt.%, based on the total weight of the resin component, of a polyester polyol that is different from (a) and has a weight-average molecular weight (Mw), as can be obtained by means of gel permeation chromatography (GPC), of at least 1,000 g/mol, preferably from 1,000 to 4,000 g/mol;
(c) optionally an aliphatic OH-terminated polymer that is different from (a) and (b) and has a weight-average molecular weight (Mw), as can be obtained by means of gel permeation chromatography (GPC), of at least 1,000 g/mol, preferably from 1,000 to 20,000 g/mol; and
(d) optionally a monomeric chain extender having at least 2 NCO-reactive groups; with a curing component containing at least one polyisocyanate, preferably an aromatic diisocyanate, **characterized in that** the polyester polyol (b) is a polycarbonate polyol comprising hexanediol and/or dodecanediol as the diol component.

## Revendications

1. Système de liant contenant
(i) un composant résineux contenant
(a) au moins 10 % en poids, par rapport au poids total du composant résineux, d'un polyol de polyester, lequel est à base d'un dimère ou d'un trimère d'acide gras ou des diols ou triols qui en dérivent, comportant une masse moléculaire moyenne en poids (Mw), telle qu'elle peut être obtenue par chromatographie par perméation sur gel (GPC), d'au moins 1000 g/mol, de préférence allant de 1000 à 4000 g/mol ;
(b) au moins 10 % en poids, par rapport au poids total du composant résineux, d'un polyol de polyester différent de (a), comportant une masse moléculaire moyenne en poids (Mw), telle qu'elle peut être obtenue par chromatographie par perméation sur gel (GPC), d'au moins 1000 g/mol, de préférence allant de 1000 à 4000 g/mol ;
(c) éventuellement, au moins un polymère aliphatique à terminaison OH, différent de (a) et (b), comportant une masse moléculaire moyenne en poids (Mw), telle qu'elle peut être obtenue par chromatographie par perméation sur gel (GPC), d'au moins 1000 g/mol, de préférence allant de 1000 à 4000 g/mol ; et
(d) éventuellement, au moins 2 % en poids d'un extenseur de chaîne monomère comportant au moins 2 groupes réactifs avec les NCO ;
(ii) un composant durcisseur contenant au moins un polyisocyanate, de préférence un diisocyanate aromatique, et/ou au moins un prépolymère de polyuréthane à terminaison NCO,
**caractérisé en ce que** le polyol de polyester (b) est un polyol de polycarbonate comportant de l'hexanediol et/ou du dodécanediol comme composant diol.

2. Système de liant selon la revendication 1, **caractérisé en ce que** le polyol de polyester (a) peut être obtenu par réaction de dimères d'acides gras, de préférence ceux pouvant être obtenus par dimérisation de deux acides gras en C18, avec des diols, de préférence des diols en C2-C6, et éventuellement des acides dicarboxyliques différents des acides gras dimères, en particulier des acides dicarboxyliques en C4-C12.

3. Système de liant selon la revendication 1 ou 2, **caractérisé en ce que** le polyol de polyester (a) est contenu dans le composant résineux en une quantité allant de 10 % en poids à 90 % en poids, de préférence jusqu'à 70 % en poids, de manière particulièrement préférée jusqu'à 50 % en poids, de préférence en une quantité d'au moins 15 % en poids, plus préférablement d'au moins 20 % en poids, de manière particulièrement préférée d'au moins 25 % en poids, en particulier en une quantité allant de 30 à 40 % en poids.

4. Système de liant selon l'une des revendications 1 à 3,
**caractérisé en ce que** le polyol de polyester (b) est contenu dans le composant résineux en une quantité allant de 10 % en poids à 90 % en poids, de préférence jusqu'à 60 % en poids, de manière particulièrement préférée jusqu'à 40 % en poids, de préférence en une quantité d'au moins 15 % en poids, en particulier en une quantité d'environ 20 % en poids.

5. Système de liant selon l'une des revendications 1 à 4,
**caractérisé en ce que** le polymère aliphatique à terminaison OH comportant une masse moléculaire moyenne en poids (Mw) d'au moins 1000 g/mol
(1) est un polybutadiène à terminaison OH, en particulier un polybutadiène hydrogéné ; et/ou
(2) est contenu dans le composant résineux en une quantité allant jusqu'à 40 % en poids, de préférence jusqu'à 30 % en poids, de manière particulièrement préférée jusqu'à 25 % en poids, de préférence en une quantité d'au moins 5 % en poids, en particulier en une quantité d'environ 20 % en poids.

6. Système de liant selon l'une des revendications 1 à 5,
**caractérisé en ce que** l'extenseur de chaîne (d)
(1) est un diol aliphatique monomère, de préférence un diol en C6-C12, en particulier le 1,9-nonanediol ; et/ou
(2) est contenu dans le composant résineux en des quantités allant jusqu'à 20 % en poids, préférentiellement jusqu'à 15 % en poids.

7. Système de liant selon l'une des revendications 1 à 6,
**caractérisé en ce que** le composant durcisseur
(1) contient au moins un diisocyanate aromatique, de préférence en une quantité allant de 90 à 100 % en poids, par rapport au composant durcisseur ; ou
(2) contient au moins un diisocyanate aromatique et au moins un prépolymère à terminaison NCO, dans lequel le prépolymère représente de préférence jusqu'à 90 % en poids du durcisseur, de préférence jusqu'à 80 % en poids, et l'au moins un diisocyanate aromatique est utilisé de préférence en des quantités d'au moins 10, de préférence d'au moins 20 % en poids.

8. Utilisation du système de liant selon l'une des revendications 1 à 7 dans des formulations adhésives, en particulier comme adhésif à deux composants, pour la réalisation de liaisons adhésives entre des substrats, dans laquelle les substrats sont en particulier des substrats différents, de préférence choisis parmi le bois, le plastique ou le métal.

9. Composition de polymères pouvant être obtenue par réaction d'un composant résineux contenant
(a) au moins 10 % en poids, par rapport au poids total du composant résineux, d'un polyol de polyester, lequel est à base d'un dimère ou d'un trimère d'acide gras ou des diols ou triols qui en dérivent, comportant une masse moléculaire moyenne en poids (Mw), telle qu'elle peut être obtenue par chromatographie par perméation sur gel (GPC), d'au moins 1000 g/mol, de préférence allant de 1000 à 4000 g/mol ;
(b) au moins 10 % en poids, par rapport au poids total du composant résineux, d'un polyol de polyester différent de (a), comportant une masse moléculaire moyenne en poids (Mw), telle qu'elle peut être obtenue par chromatographie par perméation sur gel (GPC), d'au moins 1000 g/mol, de préférence allant de 1000 à 4000 g/mol ;
(c) éventuellement, un polymère aliphatique à terminaison OH, différent de (a) et (b), comportant une masse moléculaire moyenne en poids (Mw), telle qu'elle peut être obtenue par chromatographie par perméation sur gel (GPC), d'au moins 1000 g/mol, de préférence allant de 1000 à 20000 g/mol ; et
(d) éventuellement, un extenseur de chaîne monomère comportant au moins 2 groupes réactifs avec les NCO ; comportant un composant durcisseur contenant au moins un polyisocyanate, de préférence un diisocyanate aromatique, **caractérisé en ce que** le polyol de polyester (b) est un polyol de polycarbonate comportant de l'hexanediol et/ou du dodécanediol comme composant diol.
